(19) Europäisches Patentamt
European Patent Office
Office européen des brevets

(11) Veröffentlichungsnummer: **0 550 900 A1**

# (12) EUROPÄISCHE PATENTANMELDUNG

(21) Anmeldenummer: **92122055.4**

(51) Int. Cl.5: **A01N 43/40**

(22) Anmeldetag: **28.12.92**

(30) Priorität: **09.01.92 DE 4200323**

(43) Veröffentlichungstag der Anmeldung:
**14.07.93 Patentblatt 93/28**

(84) Benannte Vertragsstaaten:
**BE CH DE FR GB IT LI NL**

(71) Anmelder: **BAYER AG**

**W-5090 Leverkusen 1 Bayerwerk(DE)**

(72) Erfinder: **Jeschke, Peter, Dr.**
**Heymannstrasse 38**
**W-5090 Leverkusen(DE)**
Erfinder: **Lindner, Werner, Dr.**
**Märchenstrasse 39**
**W-5000 Köln 80(DE)**
Erfinder: **Bonse, Gerhard, Dr.**
**Gerstenkamp 1**
**W-5000 Köln 80(DE)**
Erfinder: **Santel, Hans-Joachim, Dr.**
**Grünstrasse 9a**
**W-5090 Leverkusen(DE)**
Erfinder: **Lürssen, Klaus, Dr.**
**August-Kierspel-Strasse 145**
**W-5060 Bergisch Gladbach 2(DE)**
Erfinder: **Schmidt, Robert R., Dr.**
**Im Waldwinkel 110**
**W-5060 Bergisch Gladbach 2(DE)**
Erfinder: **Hartwig, Jürgen, Dr.**
**Am Kloster 39**
**W-5653 Leichlingen(DE)**

(54) **Herbizide- und pflanzennematizide Mittel auf Basis von Mercaptonicotinsäurederivaten.**

(57) Die Erfindung betrifft die Verwendung von Mercaptonicotinsäurederivaten der allgemeinen Formel (I)

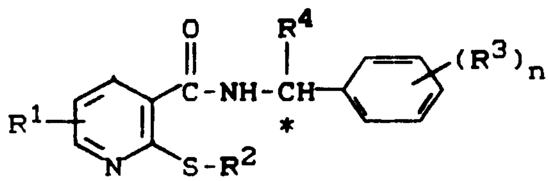

(I)

in welcher

- n für die Zahlen 0, 1, 2 oder 3 steht,
- $R^1$ für Wasserstoff, Halogen, Alkyl, Halogenalkyl oder für gegebenenfalls durch Halogen, Cyano, Nitro, Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio substituiertes Phenyl steht,
- $R^2$ für einen Rest der Reihe Alkyl, Alkenyl, Alkinyl, Cycloalkyl, Aryl oder Aralkyl steht,
- $R^3$ für Halogen, Cyano, Nitro oder für einen Rest der Reihe Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio steht, und
- $R^4$ für Alkyl steht,

als Herbizide und als Pflanzennematizide.

EP 0 550 900 A1

Die vorliegende Erfindung betrifft die Verwendung von Mercaptonicotinsäurederivaten als Herbizide und als Pflanzennematizide.

Bestimmte substituierte 2-Mercaptonicotinsäurederivate sind als Endoparasitizide Gegenstand einer vorgängigen, jedoch nicht vorveröffentlichten Patentanmeldung (vgl. DE-P 4032147). Über eine Verwendung dieser Verbindungen als Herbizide oder als Pflanzennematizide ist jedoch bisher nichts bekannt geworden.

Es wurde nun gefunden, daß die Mercaptonicotinsäurederivate der allgemeinen Formel (I)

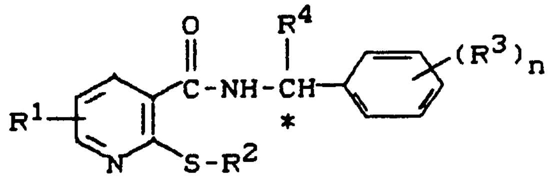

(I)

in welcher

- n für die Zahlen 0, 1, 2 oder 3 steht,
- $R^1$ für Wasserstoff, Halogen, Alkyl, Halogenalkyl oder für gegebenenfalls durch Halogen, Cyano, Nitro, Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio substituiertes Phenyl steht,
- $R^2$ für einen Rest der Reihe Alkyl, Alkenyl, Alkinyl, Cycloalkyl, Aryl oder Aralkyl steht,
- $R^3$ für Halogen, Cyano, Nitro oder für einen Rest der Reihe Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio steht, und
- $R^4$ für Alkyl steht,

starke Wirksamkeit gegen Unkräuter und gegen pflanzenparasitäre Nematoden aufweisen.

Die erfindungsgemäß zu verwendenden Mercaptonicotinsäurederivate sind durch die Formel (I) allgemein definiert. Vorzugsweise werden erfindungsgemäß diejenigen Verbindungen der Formel (I) verwendet, in welcher

- n für die Zahlen 0, 1 oder 2 steht,
- $R^1$ für Wasserstoff, Fluor, Chlor, Brom, $C_1$-$C_4$-Alkyl, $C_1$-$C_4$-Halogenalkyl oder für gegebenenfalls durch Fluor, Chlor, Brom, Cyano, Nitro, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl, Phenyl, Phenoxy oder Phenylthio substituiertes Phenyl steht,
- $R^2$ für einen Rest der Reihe $C_1$-$C_{10}$-Alkyl, $C_2$-$C_{10}$-Alkenyl, $C_2$-$C_{10}$-Alkinyl, $C_5$-$C_6$-Cycloalkyl, jeweils gegebenenfalls einfach oder mehrfach substituiertes Phenyl oder Phenyl-$C_1$-$C_3$-alkyl steht, wobei als Phenylsubstituenten Fluor, Chlor, Brom, Cyano, Nitro, $C_1$-$C_{10}$-Alkyl, $C_1$-$C_{10}$-Alkoxy, $C_1$-$C_5$-Halogenalkyl, $C_1$-$C_5$-Halogenalkoxy mit jeweils bis zu 11 gleichen oder verschiedenen Halogenatomen, sowie Phenoxy in Frage kommen,
- $R^3$ für Fluor, Chlor, Brom, Cyano, Nitro oder für einen Rest der Reihe $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl oder Phenyl steht, und
- $R^4$ für $C_1$-$C_4$-Alkyl steht.

Die in der Definition der Verbindungen der Formel (I) genannten offenkettigen Kohlenwasserstoffreste, wie Alkyl, Alkenyl und Alkinyl, sind jeweils geradkettig oder verzweigt.

Insbesondere werden erfindungsgemäß diejenigen Verbindungen der Formel (I) verwendet, in welcher

- n für die Zahlen 0, 1 oder 2 steht,
- $R^1$ für Wasserstoff, Chlor, Methyl, Ethyl, Phenyl, Chlorphenyl, Methoxyphenyl, Trifluormethoxyphenyl, Methylthiophenyl, Trifluormethylthiophenyl, Methylsulfonylphenyl, Trifluormethylsulfonylphenyl oder Methylphenyl steht,
- $R^2$ für Methyl, Ethyl, Propyl, Isopropyl, Butyl, Isobutyl, sec-Butyl, tert-Butyl, Pentyl, Allyl, Crotonyl, Propargyl, Cyclopentyl, Cyclohexyl, Phenyl, Fluorphenyl, Chlorphenyl, Bromphenyl, Methylphenyl, Nonylphenyl, Trifluormethylphenyl, Methoxyphenyl, Nitrophenyl, Benzyl, Fluorbenzyl, Chlorbenzyl, Brombenzyl, Methylbenzyl, tert-Butylbenzyl, Trifluormethylbenzyl, Nitrobenzyl, Phenoxybenzyl oder Phenylethyl steht,
- $R^3$ für Fluor, Chlor, Brom, Nitro, Methyl, Ethyl, Methoxy, Ethoxy, Trifluormethoxy, Methylthio, Methylsulfonyl, Trifluormethylthio, Trifluormethylsulfonyl oder Phenyl steht, und

$R^4$ für Methyl steht.

Die Herstellung der erfindungsgemäß zu verwendenden Mercaptonicotinsäurederivate der Formel (I) ist in einer vorgängigen, jedoch nicht vorveröffentlichten Patentanmeldung beschrieben (vgl. DE-P 4032147).

Man erhält die Verbindungen der Formel (I), wenn man beispielsweise

(a) Mercaptonicotinsäurehalogenide der allgemeinen Formel (II)

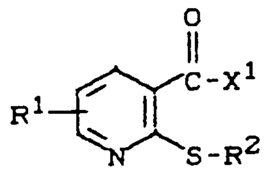

(II)

in welcher

$R^1$ und $R^2$ die oben angegebenen Bedeutungen haben und

$X^1$ für Halogen, insbesondere für Chlor steht,

mit Aminoverbindungen der allgemeinen Formel (III)

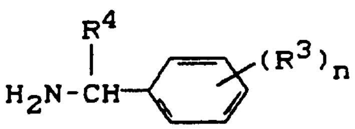

(III)

in welcher

n, $R^3$ und $R^4$ die oben angegebenen Bedeutungen haben,

gegebenenfalls in Gegenwart eines Säureakzeptors, wie z.B. Triethylamin oder Ethyl-diisopropylamin, und gegebenenfalls in Gegenwart eines Verdünnungsmittels, wie z.B. Methylenchlorid, Tetrahydrofuran oder Toluol, bei Temperaturen zwischen 0 °C und 100 °C umsetzt und nach üblichen Methoden aufarbeitet (vgl. die Herstellungsbeispiele), oder wenn man

(b) halogenierte Nicotinsäureamide der allgemeinen Formel (IV)

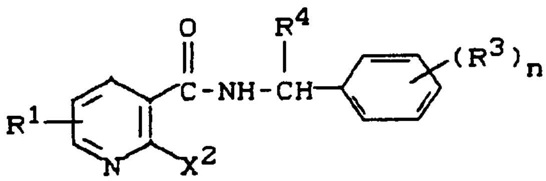

(IV)

in welcher

n, $R^1$, $R^3$ und $R^4$ die oben angegebenen Bedeutungen haben und

$X^2$ für Halogen, insbesondere für Chlor, steht,

mit Mercaptoverbindungen der allgemeinen Formel (V)

$M-S-R^2$ (V)

in welcher

$R^2$ die oben angegebene Bedeutung hat und

M für Wasserstoff oder ein Alkalimetall, insbesondere Natrium oder Kalium steht,

gegebenenfalls in Gegenwart eines Säureakzeptors, wie z.B. Natrium- oder Kaliumhydroxid, und gegebenenfalls in Gegenwart eines Verdünnungsmittels, wie z.B. Tetrahydrofuran, bei Temperaturen zwischen 0 °C und 100 °C umsetzt und nach üblichen Methoden aufarbeitet (vgl. die Herstellungsbeispiele).

Die erfindungsgemäß zu verwendenden Verbindungen der Formel (I) enthalten mindestens ein asymmetrisch substituiertes Kohlenstoffatom und können deshalb in verschiedenen enantiomeren Formen vorliegen. Die Erfindung betrifft sowohl die möglichen einzelnen Isomeren als auch Gemische dieser Isomeren.

Die Wirkstoffe der Formel (I) eignen sich zur Bekämpfung von tierischen Schädlingen, vorzugsweise Arthropoden und Nematoden, insbesondere Nematoden die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus

spp., Xiphinema spp., Trichodorus spp..

Besonders hervorzuheben ist die Wirksamkeit der Verbindungen der Formel (I) gegen pflanzenparasitäre Nematoden. Daneben wird auch bemerkenswerte Wirkung gegen pflanzenschädigende Insekten beobachtet.

Die Wirkstoffe der Formel (I) können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen der Formel (I) eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen, auf Zier- und Sportrasen und Weideflächen und zur selektiven Unkrautbekämpfung in einjährigen Kulturen eingesetzt werden.

Die Verbindungen der Formel (I) eignen sich insbesondere zur selektiven Bekämpfung von monokotylen und dikotylen Unkräutern in monokotylen Kulturen, wie Weizen, Mais und Reis. In Reis ist vor allem die Bekämpfung des Problemunkrauts Echinochloa crus galli mit sehr gutem Erfolg möglich.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.
Als feste Trägerstoffe kommen infrage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen infrage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen infrage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide infrage, beispielsweise Anilide, wie z.B. Diflufenican und Propanil; Arylcarbonsäuren, wie z.B. Dichlorpicolinsäure, Dicamba und Picloram, Aryloxyalkansäuren, wie z.B. 2,4 D, 2,4 DB, 2,4 DP, Fluroxypyr, MCPA, MCPP und Triclopyr; Aryloxy-phenoxy-alkansäureester, wie z.B. Diclofop-methyl, Fenoxaprop-ethyl, Fluazifop-butyl, Haloxyfop-methyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z.B. Butylate, Cycloate, Diallate, EPTC, Esprocarb, Molinate, Prosulfocarb, Thiobencarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Ouinchlorac, Quinmerac, Sulphosate und Tridiphane.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor, als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 10 g und 10 kg Wirkstoff pro Hektar Bodenfläche, vorzugsweise zwischen 50 g und 5 kg pro ha.

Die Herstellung und die Verwendung der erfindungsgemäßen Wirkstoffe geht aus den nachfolgenden Beispielen hervor.

<u>Anwendungsbeispiele:</u>

<u>Beispiel A</u>: Anwendung gegen Nematoden

Grenzkonzentrations-Test

Testnematode: Globodera rostochiensis
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm (= mg/l) angegeben wird. Man füllt den behandelten Boden in Töpfe, pflanzt Kartoffeln ein und hält die Töpfe bei einer Gewächshaustemperatur von 20 °C.

Nach sechs Wochen werden die Kartoffelwurzeln auf Zysten untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Wirkstoffe, Aufwandmengen und Resultate gehen aus der nachfolgenden Tabelle hervor:

**T A B E L L E A**

**Nematizid-Test**

***Globodera rostochiensis***

| Wirkstoff (Konstitution) | Abtötungsgrad in % bei Wirkstoffkonzentration in ppm |
|---|---|
| 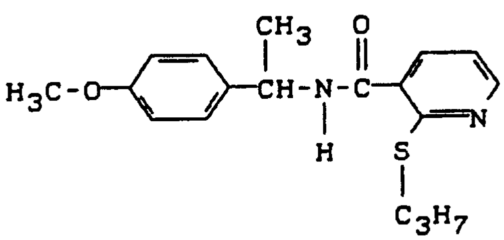 (24) | 20 ppm = 100% |

Beispiel B Pre-emergence-Test auf Herbizidwirkung

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0% = keine Wirkung (wie unbehandelte Kontrolle)

100% = totale Vernichtung

In diesem Test zeigt zum Beispiel die Verbindung gemäß dem Herstellungsbeispiel 70 bei guter Verträglichkeit gegenüber Kulturpflanzen, wie z.B. Mais, starke Wirkung gegen Unkräuter.

Tabelle B: Pre-emergence-Test/Gewächshaus

| Wirkstoff | Aufwandmenge (g/ha) | Mais | Abutilon | Setaria |
|---|---|---|---|---|
| 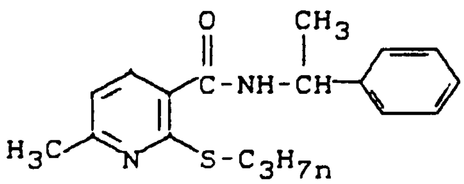 (70) | 4000 | 0 | 100 | 100 |

Beispiel C: Post-emergence-Test auf Herbizidwirkung

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5-15 cm haben, so, daß die jeweils gewünschten Wirkstoffmengen pro Flächeneinheit ausgebracht werden. Die Konzentration der Spritzbrühe wird so gewählt, daß in 1000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:
0% = keine Wirkung (wie unbehandelte Kontrolle)
100% = totale Vernichtung
In diesem Test zeigt beispielsweise die Verbindung gemäß dem Herstellungsbeispiel 70 bei guter Verträglichkeit gegenüber Kulturpflanzen, wie z.B. Weizen, starke Wirkung gegen Unkräuter.

Tabelle C: Post-emergence-Test/Gewächshaus

| Wirkstoff | Aufwand-menge (g/ha) | Weizen | Amaranthus | Datura | Ipomoea | Polygonum |
|---|---|---|---|---|---|---|
| 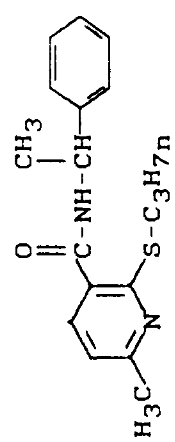 (70) | 1000 | 0 | 80 | 100 | 100 | 95 |

Beispiel D: Pre-emergence-Wasseroberflächenbehandlung bei verpflanztem Wasserreis

Zur Herstellung einer applizierfähigen Zubereitung wird 1 Teil Wirkstoff mit 5 Teilen Aceton gelöst; anschließend wird 1 Teil Benzyloxy-polyglykol-ether als Emulgator zugegeben. Dann wird Wasser bis zur

gewünschten Konzentration zugegeben. In Töpfe, die mit Erde gefüllt sind, wird Reis im 2-3-Blattstadium verpflanzt. Samen von Testpflanzen werden ausgelegt (1 cm tief). Zwei Tage später werden die Töpfe mit Wasser 3 cm überstaut. Anschließend werden die Wirkstoffzubereitungen auf die Wasseroberfläche ausgebracht. 4 Wochen später wird die herbizide Wirkung und die Schädigung der behandelten Pflanzen im Vergleich zu unbehandelten visuell in % ausgewertet. 0% bedeutet keine Wirkung, 100% bedeutet völliges Absterben.

In diesem Test zeigt sich die sehr gute Verträglichkeit der erfindungsgemäßen Wirkstoffe - insbesondere der Verbindung aus dem Herstellungsbeispiel 70 in Reis bei starker Wirkung gegen Unkräuter, insbesondere gegen Hühnerhirse (Echinochloa crus galli).

**Tabelle D:** Reistest/Gewächshaus

| Wirkstoff | Aufwandmenge (g/ha) | Reis | Echinochloa |
|---|---|---|---|
| 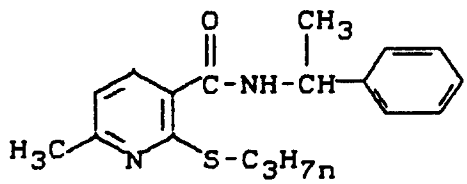 (70) | 1000 | 0 | 95 |

Herstellungsbeispiele:

Beispiel 1

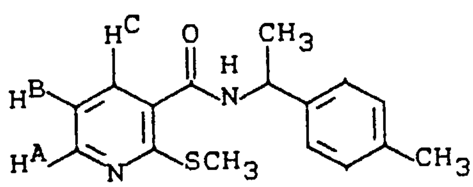

(Verfahren (a))

2,5 g (13,4 mMol) 2-Methylthio-nicotinoylchlorid und 1,8 g (13,4 mMol) (±)-1-(4-Methylphenyl)-ethylamin werden in 70 ml Tetrahydrofuran vorgelegt und bei Raumtemperatur (20 °C) mit 3,8 ml (27,3 mMol) Triethylamin versetzt. Dann wird bis zum vollständigen Umsatz (ca. 1 Stunde) unter Rühren zum Rückflußsieden erhitzt und anschließend der Ansatz auf Wasser gegossen. Der dabei ausfallende Feststoff wird abfiltriert und getrocknet.

Man erhält 3,8 g (99,2% der Theorie) (±)-2-Methylthio-N-[1-(4-methylphenyl)-ethyl]-nicotinsäureamid vom Schmelzpunkt 112 °C.

$^1$H-NMR (DMSO-$d_6$, δ): 1,41 (d, 2H, -$CH_3$; J = 7 Hz); 2,27 (s, 3H, arom. $CH_3$); 2,42 (s, 3H, -$SCH_3$); 5,06 (m, 1H, -CH); 7,13; 7,27 (2d, 4H, arom.); 7,18 (dd, $H^B$, Py; J $H^B$, $H^C$ = 4,8 Hz; J $H^B$, $H^A$ = 7,5 Hz); 7,76 (dd, $H^A$, Py; J $H^A$, $H^B$ = 7,5 Hz; J $H^A$, $H^C$ = 1,7 Hz); 8,52 (dd, $H^C$, Py; J $H^C$, $H^B$ = 4,8 Hz; J $H^C$, $H^A$ = 1,7 Hz); 8,83 (br. d, 1H, NH; J = 8 Hz) ppm

Beispiel 2

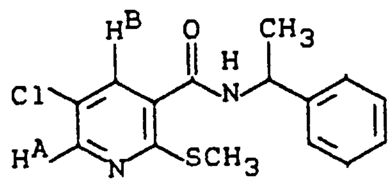

(Verfahren (a))

2,4 g (19,9 mMol) (±)-1-Phenylethylamin werden mit 5,3 ml (30,4 mMol) N-Ethyl-diisopropylamin in 40 ml Tetrahydrofuran vorgelegt und mit 4,0 g (18,0 mMol) 5-Chlor-2-methylthio-nicotinoylchlorid (gelöst in 10 ml absolutem Tetrahydrofuran) versetzt. Dann wird bis zum Erreichen der Rückflußtemperatur erhitzt, weitere 2 Stunden bei Raumtemperatur (20 °C) gerührt und der Ansatz anschließend auf Wasser gegossen. Der dabei ausfallende Feststoff wird in 100 ml 0,5 N Salzsäure verrührt, abfiltriert, zweimal mit Wasser gewaschen und getrocknet.

Man erhält 5,1 g (92,4% der Theorie) (±)-5-Chlor-2-methylthio-N-(1-phenylethyl)-nicotinsäureamid vom Schmelzpunkt 172 °C.

$^1$H-NMR ($CDCl_3$, $\delta$): 1,62 (d, 2H, $-CH_3$; J = 6,9 Hz); 2,56 (s, 3H, $-SCH_3$); 5,31 (m, 1H, -CH); 6,65 (br., 1H, NH); 7,28-7,42 (m, 5H, arom. H); 7,81 (d, $H^A$, Py; J = 1,9 Hz); 8,43 (d, $H^B$, Py; J = 1,9 Hz) ppm

Beispiel 3

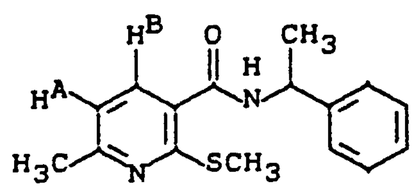

6,0 g (21,9 mMol) S(-)-2-Chlor-6-methyl-N-(1-phenylethyl)-nicotinsäureamid werden in 120 ml Tetrahydrofuran vorgelegt und mit 1,8 g (26,4 mMol) Natrium-methanthiolat versetzt. Dann wird zum Rückflußsieden erhitzt und bis zum vollständigen Umsatz (ca. 3 Stunden) bei Rückflußtemperatur gerührt. Anschließend gießt man den Ansatz auf Wasser, filtriert den dabei ausfallenden Feststoff ab und trocknet.

Man erhält 5,7 g (91,2% der Theorie) S(-)-2-Methylthio-6-methyl-N-(1-phenylethyl)-nicotinsäureamid vom Schmelzpunkt 75-76 °C.

$^1$H-NMR ($CDCl_3$, $\delta$): 1,61 (d, 2H, $-CH_3$; J = 6,9 Hz); 2,51 (s, 3H, Py-$CH_3$); 2,57 (s, 3H, $-SCH_3$); 5,31 (m, 1H, -CH); 6,75 (br., 1H, NH); 6,86 (d, $H^A$, Py; J = 7,8 Hz); 7,24-7,42 (m, 5H, arom. H); 7,74 (d, $H^B$, Py; J = 7,8 Hz) ppm

Analog zu den Herstellungsbeispielen 1 bis 3 können beispielsweise auch die in der nachstehenden Tabelle 1 aufgeführten Verbindungen der Formel (I) hergestellt werden.

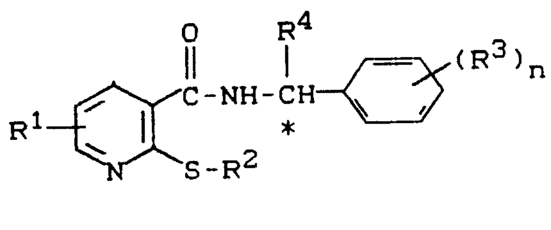

(I)

**Tabelle 1:**

| Bsp.-Nr. | n | Konfiguration an * | $R^1$ | $R^2$ | $R^3$ | $R^4$ | Physikalische Daten |
|---|---|---|---|---|---|---|---|
| 4 | 0 | S(-) | H | $CH_3$ | - | $CH_3$ | Fp.: 114° C |
| 5 | 0 | R(+) | H | $CH_3$ | - | $CH_3$ | Fp.: 109° C |
| 6 | 0 | R,S | H | $C_2H_5$ | - | $CH_3$ | Fp.: 98° C |
| 7 | 0 | R,S | H | $nC_3H_7$ | - | $CH_3$ | Fp.: 109° C |
| 8 | 0 | R,S | H | $nC_5H_{11}$ | - | $CH_3$ | Fp.: 106° C |
| 9 | 0 | R,S | H | $CH_2$-CH=$CH_2$ | - | $CH_3$ | Fp.: 106° C |
| 10 | 0 | R,S | H | 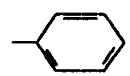 | - | $CH_3$ | |
| 11 | 1 | R,S | H | $C_2H_5$ | (4-)$CH_3$ | $CH_3$ | Fp.: 97° C |
| 12 | 1 | R,S | H | $nC_3H_7$ | (4-)$CH_3$ | $CH_3$ | Fp.: 103° C |
| 13 | 1 | R,S | H | $CH_3$ | (3-)$CH_3$ | $CH_3$ | Fp.: 85° C |
| 14 | 1 | R,S | H | $C_2H_5$ | (3-)$CH_3$ | $CH_3$ | Fp.: 96° C |
| 15 | 1 | R,S | H | $nC_3H_7$ | (3-)$CH_3$ | $CH_3$ | Fp.: 77° C |
| 16 | 1 | R,S | H | $CH_3$ | (2-)$CH_3$ | $CH_3$ | Fp.: 115° C |
| 17 | 1 | R,S | H | $C_2H_5$ | (2-)$CH_3$ | $CH_3$ | Fp.: 118° C |
| 18 | 1 | R,S | H | $nC_3H_7$ | (2-)$CH_3$ | $CH_3$ | Fp.: 108° C |

| Bsp.-Nr. | n | Konfiguration an * | $R^1$ | $R^2$ | $R^3$ | $R^4$ | Physikalische Daten |
|---|---|---|---|---|---|---|---|
| 19 | 1 | R,S | H | $CH_3$ | (4-)$C_2H_5$ | $CH_3$ | Fp.: 117° C |
| 20 | 1 | R,S | H | $C_2H_5$ | (4-)$C_2H_5$ | $CH_3$ | Fp.: 103° C |
| 21 | 1 | R,S | H | $nC_3H_7$ | (4-)$C_2H_5$ | $CH_3$ | Fp.: 97° C |
| 22 | 1 | R,S | H | $CH_3$ | (4-)$OCH_3$ | $CH_3$ | Fp.: 102° C |
| 23 | 1 | R,S | H | $C_2H_5$ | (4-)$OCH_3$ | $CH_3$ | Fp.: 102° C |
| 24 | 1 | R,S | H | $nC_3H_7$ | (4-)$OCH_3$ | $CH_3$ | Fp.: 95° C |
| 25 | 1 | R,S | H | $nC_3H_7$ | (3-)$OCH_3$ | $CH_3$ | Fp.: 82° C |
| 26 | 1 | R,S | H | $CH_3$ | (2-)$OCH_3$ | $CH_3$ | Fp.: 53° C |
| 27 | 1 | R,S | H | $CH_3$ | (4-) 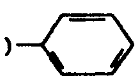 | $CH_3$ | Fp.: 173° C |
| 28 | 1 | R,S | H | $C_2H_5$ | (4-) 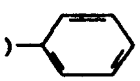 | $CH_3$ | Fp.: 139° C |
| 29 | 1 | R,S | H | $nC_3H_7$ | (4-) 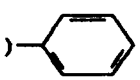 | $CH_3$ | Fp.: 134° C |
| 30 | 1 | R,S | H | $CH_3$ | (4-)Cl | $CH_3$ | Fp.: 148° C |
| 31 | 1 | R,S | H | $C_2H_5$ | (4-)Cl | $CH_3$ | Fp.: 94° C |

| Bsp.-Nr. | n | Konfiguration an * | $R^1$ | $R^2$ | $R^3$ | $R^4$ | Physikalische Daten |
|---|---|---|---|---|---|---|---|
| 32 | 1 | R,S | H | $nC_3H_7$ | (4-)Cl | $CH_3$ | Fp.: 92° C |
| 33 | 1 | R,S | H | $CH_3$ | (3-)Cl | $CH_3$ | Fp.: 98° C |
| 34 | 1 | R,S | H | $C_2H_5$ | (3-)Cl | $CH_3$ | Fp.: 95° C |
| 35 | 1 | R,S | H | $nC_3H_7$ | (3-)Cl | $CH_3$ | Fp.: 84° C |
| 36 | 1 | R,S | H | $CH_3$ | (2-)Cl | $CH_3$ | Fp.: 133° C |
| 37 | 1 | R,S | H | $C_2H_5$ | (2-)Cl | $CH_3$ | Fp.: 126° C |
| 38 | 1 | R,S | H | $nC_3H_7$ | (2-)Cl | $CH_3$ | Fp.: 133° C |
| 39 | 2 | R,S | H | $CH_3$ | $(2,4-)Cl_2$ | $CH_3$ | Fp.: 163° C |
| 40 | 2 | R,S | H | $nC_3H_7$ | $(2,4-)Cl_2$ | $CH_3$ | Fp.: 113° C |
| 41 | 2 | R,S | H | $CH_3$ | $(3,4-)Cl_2$ | $CH_3$ | Fp.: 128° C |
| 42 | 2 | R,S | H | $C_2H_5$ | $(3,4-)Cl_2$ | $CH_3$ | Fp.: 105° C |
| 43 | 2 | R,S | H | $nC_3H_7$ | $(3,4-)Cl_2$ | $CH_3$ | Fp.: 98° C |
| 44 | 1 | R,S | H | $CH_3$ | (4-)F | $CH_3$ | Fp.: 128° C |
| 45 | 1 | R,S | H | $C_2H_5$ | (4-)F | $CH_3$ | Fp.: 101° C |
| 46 | 1 | R,S | H | $nC_3H_7$ | (4-)F | $CH_3$ | Fp.: 87° C |
| 47 | 1 | R,S | H | $CH_3$ | (2-)F | $CH_3$ | Fp.: 139° C |

| Bsp.-Nr. | n | Konfiguration an * | $R^1$ | $R^2$ | $R^3$ | $R^4$ | Physikalische Daten |
|---|---|---|---|---|---|---|---|
| 48 | 1 | R,S | H | $nC_3H_7$ | (2-)F | $CH_3$ | Fp.: 102° C |
| 49 | 1 | R,S | H | $CH_3$ | (4-)$NO_2$ | $CH_3$ | Fp.: 142° C |
| 50 | 0 | R,S | (5-)Cl | $C_2H_5$ | - | $CH_3$ | Fp.: 142° C |
| 51 | 0 | R,S | (5-)Cl | $nC_3H_7$ | - | $CH_3$ | Fp.: 144° C |
| 52 | 0 | R,S | (5-)Cl | $iC_3H_7$ | - | $CH_3$ | Fp.: 131° C |
| 53 | 0 | R,S | (5-)Cl | $nC_4H_9$ | - | $CH_3$ | Fp.: 124° C |
| 54 | 1 | R,S | (5-)Cl | $CH_3$ | (4-)$CH_3$ | $CH_3$ | Fp.: 154° C |
| 55 | 1 | R,S | (5-)Cl | $C_2H_5$ | (4-)$CH_3$ | $CH_3$ | Fp.: 144° C |
| 56 | 1 | R,S | (5-)Cl | $nC_3H_7$ | (4-)$CH_3$ | $CH_3$ | Fp.: 133° C |
| 57 | 1 | R,S | (5-)Cl | $iC_3H_7$ | (4-)$CH_3$ | $CH_3$ | Fp.: 132° C |
| 58 | 1 | R,S | (5-)Cl | $nC_4H_9$ | (4-)$CH_3$ | $CH_3$ | Fp.: 149° C |
| 59 | 1 | R,S | (5-)Cl | $CH_3$ | (4-)Cl | $CH_3$ | Fp.: 166° C |
| 60 | 1 | R,S | (5-)Cl | $C_2H_5$ | (4-)Cl | $CH_3$ | Fp.: 143° C |
| 61 | 1 | R,S | (5-)Cl | $nC_3H_7$ | (4-)Cl | $CH_3$ | Fp.: 126° C |
| 62 | 1 | R,S | (5-)Cl | $iC_3H_7$ | (4-)Cl | $CH_3$ | Fp.: 144° C |
| 63 | 1 | R,S | (5-)Cl | $nC_4H_9$ | (4-)Cl | $CH_3$ | Fp.: 134° C |

| Bsp.-Nr. | n | Konfiguration an * | $R^1$ | $R^2$ | $R^3$ | $R^4$ | Physikalische Daten |
|---|---|---|---|---|---|---|---|
| 64 | 0 | R,S | 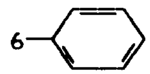 | $CH_3$ | - | $CH_3$ | Fp.: 198° C |
| 65 | 0 | R,S | 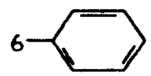 | $nC_3H_7$ | - | $CH_3$ | Fp.: 198° C |
| 66 | 0 | R,S | 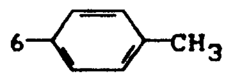 | $CH_3$ | - | $CH_3$ | Fp.: 182° C |
| 67 | 0 | R,S | 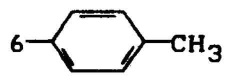 | $nC_3H_7$ | - | $CH_3$ | Fp.: 149° C |
| 68 | 0 | R,S | 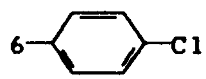 | $nC_3H_7$ | - | $CH_3$ | Fp.: 151° C |
| 69 | 0 | S(-) | $6-CH_3$ | $C_2H_5$ | - | $CH_3$ | Fp.: 108° C |
| 70 | 0 | S(-) | $6-CH_3$ | $nC_3H_7$ | - | $CH_3$ | Fp.: 81° C |
| 71 | 0 | R(+) | $6-CH_3$ | $nC_3H_7$ | - | $CH_3$ | Fp.: 81° C |
| 72 | 0 | S(-) | $6-CH_3$ | $iC_3H_7$ | - | $CH_3$ | Fp.: 87° C |
| 73 | 0 | S(-) | $6-CH_3$ | $nC_4H_9$ | - | $CH_3$ | Fp.: 92° C |
| 74 | 0 | S(-) | $6-CH_3$ | $iC_4H_9$ | - | $CH_3$ | Fp.: 79° C |

| Bsp.-Nr. | n | Konfiguration an * | $R^1$ | $R^2$ | $R^3$ | $R^4$ | Physikalische Daten |
|---|---|---|---|---|---|---|---|
| 75 | 0 | S(-) | 6-$CH_3$ | $sC_4H_9$ | - | $CH_3$ | Fp.: 64° C |
| 76 | 0 | S(-) | 6-$CH_3$ | $tC_4H_9$ | | | |
| 77 | 0 | S(-) | 6-$CH_3$ | $nC_{10}H_{21}$ | - | $CH_3$ | Fp.: Öl |
| 78 | 0 | S(-) | 6-$CH_3$ | $CH_2$ 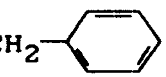 | - | $CH_3$ | Fp.: 93° C |
| 79 | 0 | S(-) | 6-$CH_3$ | $(CH_2)_2$ 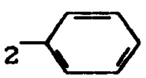 | - | $CH_3$ | Fp.: 100° C |
| 80 | 0 | S(-) | 6-$CH_3$ | 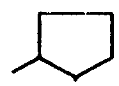 | - | $CH_3$ | Fp.: 90° C |
| 81 | 0 | S(-) | 6-$CH_3$ | 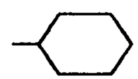 | - | $CH_3$ | Fp.: 87° C |
| 82 | 1 | R,S | (6-)$CH_3$ | $nC_3H_7$ | (4-)Cl | $CH_3$ | Fp.: 91° C |
| 83 | 1 | R,S | (6-)$CH_3$ | $nC_3H_7$ | (4-)F | $CH_3$ | Fp.: 65° C |
| 84 | 1 | R,S | (6-)$CH_3$ | $nC_3H_7$ | (4-)Cl | $C_2H_5$ | Fp.: 106° C |
| 85 | 1 | R,S | (6-)$CH_3$ | $nC_3H_7$ | (4-)Cl | $nC_3H_7$ | Fp.: 101° C |

| Bsp.-Nr. | n | Konfiguration an * | $R^1$ | $R^2$ | $R^3$ | $R^4$ | Physikalische Daten |
|---|---|---|---|---|---|---|---|
| 86 | 1 | R,S | (6-)$CH_3$ | $nC_3H_7$ | (4-)Cl | $iC_3H_7$ | Fp.: 85° C |
| 87 | 1 | R,S | (6-)$CH_3$ | $nC_3H_7$ | (4-)F | $C_2H_5$ | Fp.: 50° C |
| 88 | 1 | R,S | (6-)$CH_3$ | $nC_3H_7$ | (4-)F | $nC_3H_7$ | Fp.: 92° C |
| 89 | 1 | R,S | (6-)$CH_3$ | $nC_3H_7$ | (4-)F | $iC_3H_7$ | Fp.: 89° C |
| 90 | 1 | R,S | (6-)$CH_3$ | $nC_3H_7$ | (3-)Cl | $CH_3$ | Fp.: 93° C |
| 91 | 1 | R,S | (6-)$CH_3$ | $nC_3H_7$ | (2-)$CH_3$ | $CH_3$ | Fp.: 109° C |
| 92 | 1 | R,S | (6-)$CH_3$ | $nC_3H_7$ | (3-)$CH_3$ | $CH_3$ | Fp.: 73° C |
| 93 | 1 | R,S | (6-)$CH_3$ | $nC_3H_7$ | (2-)Cl | $CH_3$ | Fp.: 124° C |
| 94 | 1 | R,S | (6-)$CH_3$ | $nC_3H_7$ | (4-)$CH_3$ | $CH_3$ | Fp.: 84° C |
| 95 | 1 | R,S | (6-)$CH_3$ | $nC_3H_7$ | (3-)$OCH_3$ | $CH_3$ | Fp.: 70° C |
| 96 | 0 | S(-) | (6-)$C_6H_5$ | $nC_3H_7$ | - | $CH_3$ | Fp.: 172° C |
| 97 | 0 | S(-) | (6) 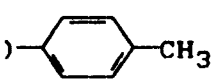 | $nC_3H_7$ | - | $CH_3$ | Fp.: 168° C |

| Bsp.-Nr. | n | Konfiguration an * | $R^1$ | $R^2$ | $R^3$ | $R^4$ | Physikalische Daten |
|---|---|---|---|---|---|---|---|
| 98 | 0 | S(-) | (6)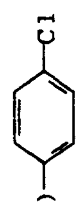 | $nC_3H_7$ | - | $CH_3$ | Fp.: 150°C |
| 99 | O | S(-) | (5-)Cl | $nC_3H_7$ | - | $CH_3$ | Fp.: 151°C |
| 100 | 1 | R,S | (6-)$CH_3$ | $nC_3H_7$ | (4-)$OCH_3$ | $CH_3$ | Fp.: 89°C |
| 101 | 2 | R,S | (6-)$CH_3$ | $nC_3H_7$ | (2,4-)Cl | $CH_3$ | Fp.: 148°C |
| 102 | 2 | R,S | (6-)$CH_3$ | $nC_3H_7$ | (3,4-)Cl | $CH_3$ | Fp.: 119°C |
| 103 | 1 | R,S | (6-)$CH_3$ | $nC_3H_7$ | (4-)$C_2H_5$ | $CH_3$ | Fp.: 76°C |

Ausgangsstoffe der Formel (II):

Beispiel (II-1)

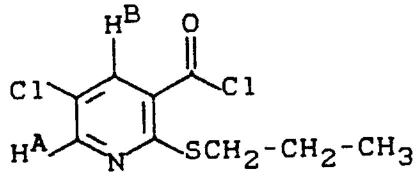

89,4 g (0,39 Mol) 5-Chlor-2-propylthio-nicotinsäure werden mit 500 ml Thionylchlorid versetzt und 15 Minuten unter Rühren zum Rückflußsieden erhitzt. Anschließend wird der Reaktionsansatz im Vakuum eingeengt und der anfallende Feststoff abgetrennt.

Man erhält 96,2 g (98,6% der Theorie) 5-Chlor-2-propylthio-nicotinoylchlorid.
$^1$H-NMR ($CDCl_3$, $\delta$): 1,05 (t, 3H, $-CH_3$; J = 7,3 Hz); 1,72 (m, 2H, $-CH_2-$; J = 7,3 Hz); 3,16 (t, 2H, $-SCH_2-$; J = 7,3 Hz); 8,45 (d, $H^A$, Py; J = 2,4 Hz); 8,56 (d, $H^B$, Py; J = 2,4 Hz) ppm.

Analog können die in der nachstehenden Tabelle aufgeführten Ausgangsverbindungen der Formel (II, $R^1$ = (5-)Cl, $X^1$ = Cl) hergestellt werden.

**Tabelle 2**

**Beispiele für die Ausgangsverbindungen der Formel (II)**

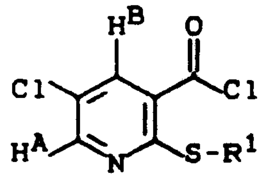

| Bsp.-Nr. | $R^1$ | Physikalische Daten |
|---|---|---|
| II-2 | $-CH_3$ | $^1$H-NMR ($CDCl_3$, $\delta$): 2,55 (s, 3H, $-SCH_3$); 8,47 (d, $H^A$, Py; J = 2,4, Hz); 8,60 (d, $H^B$, Py; J = 2,4 Hz) ppm |
| II-3 | $-CH_2CH_3$ | $^1$H-NMR ($CDCl_3$, $\delta$): 1,36 (t, 3H, $-CH_3$; J = 7,4 Hz); 3,19 (q, 2H, $-SCH_2-$; J = 7,4 Hz); 8,46 (d, $H^A$, Py; J = 2,4 Hz); 8,57 (d, $H^B$, Py; J = 2,4 Hz) ppm |
| II-3 | $-CH(CH_3)_2$ | $^1$H-NMR ($CDCl_3$; $\delta$): 1,40 (d, 6H, $-CH_3$; J = 6,8 Hz); 4,19 (m, 1H, -SCH; J = 6,8 Hz); 8,45 (d, $H^A$, Py; J = 2,4 Hz); 8,57 (d, $H^B$; Py; J = 2,4 Hz) ppm |
| II-4 | $-(CH_2)_3CH_3$ | $^1$H-NMR ($CDCl_3$, $\delta$): 0,94 (t, 3H, $-CH_3$; J = 7,3 Hz); 1,43-1,73 (2m, 4H, $-CH_2CH_2-$); 3,18 (t, 2H, $-SCH_2-$; J = 7,3 Hz); 8,45 (d, $H^A$, Py; J = 2,4 Hz); 8,56 (d, $H^B$, Py; J = 2,4 Hz) ppm |

Ausgangsstoffe der Formel (IV):

Beispiel (IV-1)

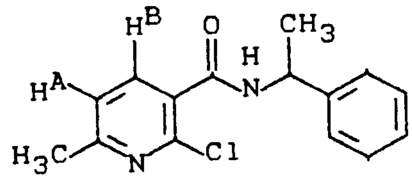

3,2 g (26,4 mMol) S(-)-1-Phenylethylamin und 3,2 g (31,6 mMol) Triethylamin werden in 50 ml absolutem Methylenchlorid vorgelegt und bei 5-10 °C tropfenweise mit 5,0 g (26,4 mMol) 2-Chlor-6-methyl-nicotinoylchlorid (gelöst in 10 ml absolutem Methylenchlorid) versetzt. Dann wird noch 3 Stunden bei Raumtemperatur nachgerührt und der gesamte Ansatz im Vakuum eingeengt. Der verbleibende Rückstand wird mit Wasser gewaschen, aus Ethanol/Wasser umkristallisiert und getrocknet.

Man erhält 6,4 g (88,2% der Theorie) S(-)-2-Chlor-6-methyl-N-(1-phenylethyl)-nicotinsäureamid vom Schmelzpunkt 162-163 °C.

$^1$H-NMR ($CDCl_3$, δ): 1,61 (d, 2H, $-CH_3$; J = 6,9 Hz); 2,54 (s, 3H, Py-$CH_3$); 5,30 (m, 1H, -CH); 6,91 (br., 1H, NH); 7,15 (d, $H^A$, Py; J = 7,8 Hz); 7,27-7,41 (m, 5H, arom. H); 8,00 (d, $H^B$, Py; J = 7,8 Hz) ppm.

Analog können die in der nachstehenden Tabelle aufgeführten Ausgangsverbindungen der Formel (IVa) hergestellt werden.

Tabelle 3

Beispiele für die Ausgangsverbindungen der Formel (IVa)

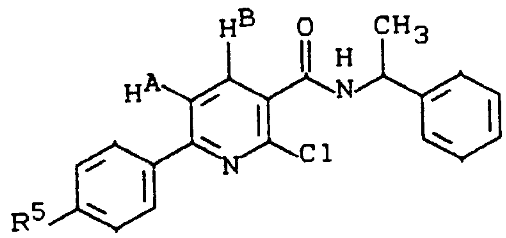

(IVa)

| Bsp.-Nr. | $R^5$ | Physikalische Daten |
|---|---|---|
| IV-2 | -H | $^1$H-NMR ($CDCl_3$, δ): 1,64 (d, 3H, $-CH_3$; J = 6,9 Hz); 5,35 (m, 1H, -CH; J = 6,9 Hz); 6,97 (br. d, 1H, NH; J = 7,3 Hz); 7,25-8,02 (2 m, 10 H, arom. H); 7,73 (d, $H^A$, Py; J = 7,9 Hz); 8,22 (d, $H^B$, Py; J = 7,9 Hz) ppm |
| IV-3 | -Cl | $^1$H-NMR ($CDCl_3$; δ): 1,64 (d, 3H, $-CH_3$; J = 6,9 Hz); 5,33 (m, 1H, -CH; J = 6,9 Hz); 6,97 (br. d, 1H, NH; J = 7,6 Hz); 7,28-7,47 (m, 5H, arom. H); 7,43; 7,94 (2d, 4H, arom. H; J = 8,8 Hz); 7,69 (d, $H^A$, Py; J = 8 Hz); 8,18 (d, $H^B$, Py; J = 8 Hz) ppm |
| IV-4 | $-CH_3$ | $^1$H-NMR ($CDCl_3$; δ): 1,64 (d, 3H, $-CH_3$; J = 6,9 Hz); 2,41 (s; 3H, arom. $CH_3$); 5,34 (m, 1H, -CH; J = 6,9 Hz); 6,96 (br. d, 1H, NH; J = 7,6 Hz); 7.30-7.40 (m, 5H, arom. H); 7,39; 7,92 (2d, 4H, arom. H; J = 8,2 Hz); 7,72 (d, $H^A$, Py; J = 8 Hz); 8,20 (d, $H^B$; Py; J = 8 Hz) ppm |

## Patentansprüche

1. Herbizide und pflanzennematizide Mittel, gekennzeichnet durch einen Gehalt an mindestens einen Mercaptonicotinsäurederivat der Formel (I)

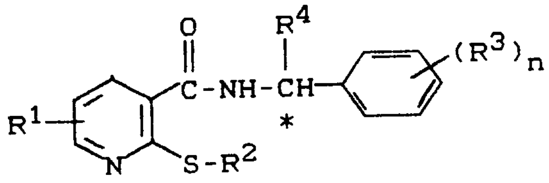

(I)

in welcher

n für die Zahlen 0, 1, 2 oder 3 steht,

$R^1$ für Wasserstoff, Halogen, Alkyl, Halogenalkyl oder für gegebenenfalls durch Halogen, Cyano, Nitro, Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio substituiertes Phenyl steht,

$R^2$ für einen Rest der Reihe Alkyl, Alkenyl, Alkinyl, Cycloalkyl, Aryl oder Aralkyl steht,

$R^3$ für Halogen, Cyano, Nitro oder für einen Rest der Reihe Alkyl, Halogenalkyl, Alkoxy, Halogenalkoxy, Alkylthio, Halogenalkylthio, Alkylsulfonyl, Halogenalkylsulfonyl, Aryl, Aryloxy oder Arylthio steht, und

$R^4$ für Alkyl steht.

**2.** Herbizide und pflanzennematizide Mittel, gekennzeichnet durch einen Gehalt an mindestens einem Mercaptonicotinsäurederivat der Formel (I) gemäß Anspruch 1, dadurch gekennzeichnet, daß

n für die Zahlen 0, 1 oder 2 steht,

$R^1$ für Wasserstoff, Fluor, Chlor, Brom, $C_1$-$C_4$-Alkyl, $C_1$-$C_4$-Halogenalkyl oder für gegebenenfalls durch Fluor, Chlor, Brom, Cyano, Nitro, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl, Phenyl, Phenoxy oder Phenylthio substituiertes Phenyl steht,

$R^2$ für einen Rest der Reihe $C_1$-$C_{10}$-Alkyl, $C_2$-$C_{10}$-Alkenyl, $C_2$-$C_{10}$-Alkinyl, $C_5$-$C_6$-Cycloalkyl, jeweils gegebenenfalls einfach oder mehrfach substituiertes Phenyl oder Phenyl-$C_1$-$C_3$-alkyl steht, wobei als Phenylsubstituenten Fluor, Chlor, Brom, Cyano, Nitro, $C_1$-$C_{10}$-Alkyl, $C_1$-$C_{10}$-Alkoxy, $C_1$-$C_5$-Halogenalkyl, $C_1$-$C_5$-Halogenalkoxy mit jeweils bis zu 11 gleichen oder verschiedenen Halogenatomen, sowie Phenoxy in Frage kommen,

$R^3$ für Fluor, Chlor, Brom, Cyano, Nitro oder für einen Rest der Reihe $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl oder Phenyl steht, und

$R^4$ für $C_1$-$C_4$-Alkyl steht.

**3.** Herbizide und pflanzennematizide Mittel, gekennzeichnet durch einen Gehalt an mindestens einem Mercaptonicotinsäurederivat der Formel (I) gemäß Anspruch 1, dadurch gekennzeichnet, daß

n für die Zahlen 0, 1 oder 2 steht,

$R^1$ für Wasserstoff, Chlor, Methyl, Ethyl, Phenyl, Chlorphenyl, Methoxyphenyl, Trifluormethoxyphenyl, Methylthiophenyl, Trifluormethylthiophenyl, Methylsulfonylphenyl, Trifluormethylsulfonylphenyl oder Methylphenyl steht,

$R^2$ für Methyl, Ethyl, Propyl, Isopropyl, Butyl, Isobutyl, sec-Butyl, tert-Butyl, Pentyl, Allyl, Crotonyl, Propargyl, Cyclopentyl, Cyclohexyl, Phenyl, Fluorphenyl, Chlorphenyl, Bromphenyl, Methylphenyl, Nonylphenyl, Trifluormethylphenyl, Methoxyphenyl, Nitrophenyl, Benzyl, Fluorbenzyl, Chlorbenzyl, Brombenzyl, Methylbenzyl, tert-Butylbenzyl, Trifluormethylbenzyl, Nitrobenzyl, Phenoxybenzyl oder Phenylethyl steht,

$R^3$ für Fluor, Chlor, Brom, Nitro, Methyl, Ethyl, Methoxy, Ethoxy, Trifluormethoxy, Methylthio, Methylsulfonyl, Trifluormethylthio, Trifluormethylsulfonyl oder Phenyl steht, und

$R^4$ für Methyl steht.

**4.** Verfahren zur Bekämpfung von Unkräutern, dadurch gekennzeichnet, daß man Mercaptonicotinsäurederivate der Formel (I) auf Unkräuter und/oder ihre Lebensräume einwirken läßt.

**5.** Verwendung von Mercaptonicotinsäurederivaten gemäß Formel (I) zur Bekämpfung von Unkräutern.

**6.** Verfahren zur Herstellung von herbiziden und pflanzennematiziden Mitteln, dadurch gekennzeichnet, daß man Mercaptonicotinsäurederivate der Formel (I) gemäß Anspruch 1 mit Streckmitteln und/oder

oberflächenaktiven Substanzen vermischt.

**7.** Verfahren zur Bekämpfung von Pflanzennematoden, dadurch gekennzeichnet, daß man Mercaptonicotinsäurederivate der Formel (I) gemäß Anspruch 1 auf Nematoden und/oder ihre Lebensräume einwirken läßt.

**8.** Verwendung von Mercaptonicotinsäurederivaten der Formel (I) gemäß Anspruch 1 zur Bekämpfung von Pflanzennematoden.

Europäisches Patentamt

# EUROPÄISCHER RECHERCHENBERICHT

Nummer der Anmeldung

EP 92 12 2055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,A<br>D | EP-A-0 480 258 (BAYER AG)<br>--- | | A01N43/40 |
| A | EP-A-0 298 752 (ISHIHARA SANGYO KAISHA LTD.)<br>--- | | |
| A | CHEMICAL ABSTRACTS, vol. 110, no. 9, 27. Februar 1989, Columbus, Ohio, US; abstract no. 75498s, H.SUZUKI ET. AL. 'Preparation of heterocyclylamidoacetonitriles as agrochemical microbicides' Seite 653 ;<br>* Zusammenfassung *<br>& JP-A-63 135 364 (NISSAN CHEMICAL INDUSTRIES LTD.)<br>4. Juni 1988<br>----- | | |
| | | | RECHERCHIERTE SACHGEBIETE (Int. Cl.5 ) |
| | | | A01N |

Der vorliegende Recherchenbericht wurde für alle Patentansprüche erstellt

| Recherchenort | Abschlußdatum der Recherche | Prüfer |
|---|---|---|
| DEN HAAG | 15 APRIL 1993 | DONOVAN T.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument